(19) Europäisches Patentamt / European Patent Office / Office européen des brevets

(11) **EP 3 974 225 B1**

(12) **EUROPEAN PATENT SPECIFICATION**

(45) Date of publication and mention
of the grant of the patent:
**11.12.2024 Bulletin 2024/50**

(21) Application number: **21194420.2**

(22) Date of filing: **01.09.2021**

(51) International Patent Classification (IPC):
*B60K 6/387* (2007.10)   *B60K 6/48* (2007.10)
*B60K 6/547* (2007.10)   *B60K 6/442* (2007.10)
*B60W 10/02* (2006.01)   *B60W 10/06* (2006.01)
*B60W 10/08* (2006.01)   *B60W 10/11* (2012.01)
*B60W 20/20* (2016.01)   *B60W 20/40* (2016.01)
*B60W 30/192* (2012.01)   *B60W 30/188* (2012.01)
*B60W 50/00* (2006.01)

(52) Cooperative Patent Classification (CPC):
**B60K 6/48; B60K 6/387; B60K 6/547; B60W 10/02;
B60W 10/06; B60W 10/08; B60W 20/40;
B60W 30/1882; B60W 30/192;** B60K 2006/4808;
B60K 2006/4825; B60W 2050/0009;
B60W 2050/001; B60W 2050/0011;
B60W 2510/0216;                    (Cont.)

(54) **CONTROL DEVICE FOR HYBRID VEHICLE**

STEUERUNGSVORRICHTUNG FÜR HYBRIDFAHRZEUG

DISPOSITIF DE COMMANDE POUR VÉHICULE HYBRIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.09.2020 JP 2020158753**

(43) Date of publication of application:
**30.03.2022 Bulletin 2022/13**

(73) Proprietor: **Suzuki Motor Corporation
Shizuoka 432-8611 (JP)**

(72) Inventor: **ITO, Yoshiki
Hamamatsu-shi, 432-8611 (JP)**

(74) Representative: **Henkel & Partner mbB
Patentanwaltskanzlei, Rechtsanwaltskanzlei
Maximiliansplatz 21
80333 München (DE)**

(56) References cited:
**US-A1- 2015 298 681     US-B2- 8 838 317
US-B2- 9 028 363**

(52) Cooperative Patent Classification (CPC): (Cont.)
B60W 2510/0638; B60W 2510/081;
B60W 2510/1005; B60W 2520/10; B60W 2540/10;
B60W 2540/103; B60W 2540/14; B60W 2710/021;
B60W 2710/0666; B60W 2710/083; Y02T 10/62

**Description**

This invention relates to a control device for a hybrid vehicle.

JP 2012-41038 A describes a technology of determining whether to switch an EV mode and an HEV mode using an accelerator opening degree and a vehicle speed.

This is to improve fuel efficiency by stopping an engine and performing EV running in a region where the power required for running is small so as not to use a low load region in which the engine is inefficient.

US 2015/298681 A1 discloses a control apparatus for a hybrid vehicle comprising a manual transmission unit, an engine, a clutch, an electric motor, and a control unit switching an EV mode and an HEV mode. The control unit maintains the EV mode until a smaller one of a driver request torque and a required transmission torque is greater than a determination value.

However, in a vehicle using a manual transmission unit, since driving power required by a driver in a selected gear stage is different even at the same vehicle speed or accelerator opening degree, the mode is shifted to the HEV mode even when the driver does not require the driving power if the running mode switching determination is performed only by the vehicle speed and the accelerator opening degree. As a result, it is not possible to sufficiently obtain an effect of improving fuel efficiency.

Here, an object of this invention is to provide a control device for a hybrid vehicle capable of improving fuel efficiency by suppressing a shift to an HEV mode not required by a driver.

In order to solve the above-described problems, according to aspects of this invention, there is provided a control device for a hybrid vehicle including the features of claim 1.

In this way, according to this invention, it is possible to improve fuel efficiency by suppressing a shift to an HEV mode not required by a driver.

Fig. 1 is a schematic configuration diagram of a hybrid vehicle according to an embodiment of this invention.

Fig. 2 is a flowchart showing a procedure of a mode determination process of a control device for the hybrid vehicle according to an embodiment of this invention.

Fig. 3 is a flowchart showing a procedure of a virtual engine rotation speed calculation process of the control device for the hybrid vehicle according to an embodiment of this invention.

Fig. 4 is a flowchart showing a procedure of an MG torque instruction value calculation process of the control device for the hybrid vehicle according to an embodiment of this invention.

Fig. 5 is a diagram showing an example of a driver request torque calculation map of the control device for the hybrid vehicle according to an embodiment of this invention.

Fig. 6 is a diagram showing an example of an HEV transition threshold based on an engine rotation number of the control device for the hybrid vehicle according to an embodiment of this invention.

Fig. 7 is a diagram showing an example of an HEV transition threshold based on a vehicle speed of the control device for the hybrid vehicle according to an embodiment of this invention.

Fig. 8 is a schematic configuration diagram of the hybrid vehicle according to an embodiment of this invention in which a motor generator is provided in a power transmission path between an engine and a manual transmission unit.

A control device for a hybrid vehicle according to embodiments of this invention includes: a manual transmission unit allowing a driver to manually select an arbitrary shift stage; an engine driving a drive wheel through the manual transmission unit; a clutch enabling or disabling the transmission of power between the engine and the manual transmission unit; an electric motor; and a control unit switching an EV mode allowing the vehicle to run only using the electric motor as a drive source and an HEV mode allowing the vehicle to run using the engine and the electric motor as a drive source, wherein the control unit maintains the EV mode until a ratio with respect to an upper limit of an accelerator opening degree becomes larger as the shift stage of the manual transmission unit becomes a higher speed stage.

Accordingly, the control device for the hybrid vehicle according to embodiments of this invention can improve fuel efficiency by suppressing a shift to the HEV mode not required by the driver.

Hereinafter, a hybrid vehicle equipped with a control device according to embodiments of this invention will be described in detail with reference to the drawings.

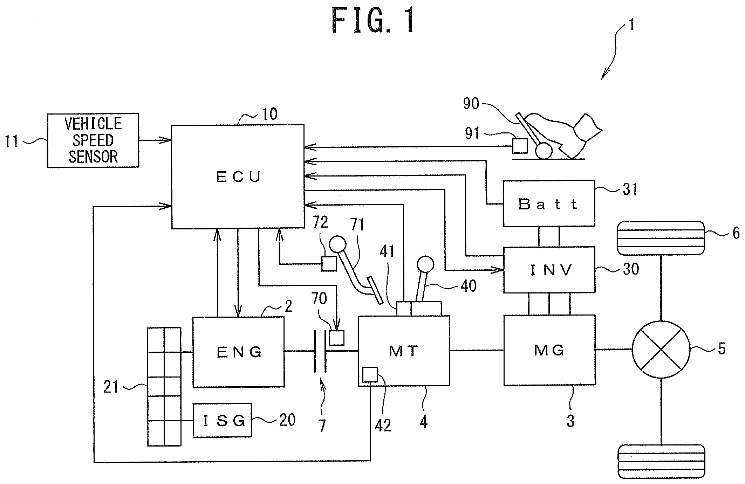

In Fig. 1, a hybrid vehicle 1 according to embodiments of this invention includes an engine 2, a motor generator 3 which is an electric motor, a manual transmission unit 4, a differential 5, a drive wheel 6, and an electric control unit (ECU) 10.

The engine 2 is provided with a plurality of cylinders. In this embodiment, the engine 2 is configured to perform a series of four strokes including an intake stroke, a compression stroke, an expansion stroke, and an exhaust stroke on each cylinder.

An integrated starter generator (ISG) 20 is connected to the engine 2. The ISG 20 is connected to a crankshaft of the engine 2 through a belt 21 and the like.

The ISG 20 rotates when electric power is supplied thereto and has a function of an electric motor rotationally driving the engine 2 and a function of a generator converting a rotational force input from the crankshaft into electric power.

The motor generator 3 has a function of an electric motor which is driven by the electric power supplied from a battery 31 via an inverter 30 and a function of a generator which generates power by the reverse driving power input from a differential 5.

The inverter 30 converts the DC electric power supplied from the battery 31 into three-phase AC electric power and supplies the three-phase AC electric power to the motor generator 3 or converts the three-phase AC electric power generated by the motor generator 3 into DC electric power and charges the battery 31 by the control of the ECU 10.

The battery 31 is composed of a secondary battery such as a lithium ion battery.

The manual transmission unit 4 is configured to shift and output a rotation from the engine 2 at a shift ratio corresponding to any one of a plurality of shift stages. An output shaft of the manual transmission unit 4 is connected to the right and left drive wheels 6 through the differential 5. An output shaft of the motor generator 3 is connected to the output shaft of the manual transmission unit 4.

As the shift stage which can be established by the manual transmission unit 4, for example, running shift stages from a first speed stage corresponding to a low speed stage to a fifth speed stage corresponding to a high speed stage and a reverse stage are known. The number of running shift stages is different depending on the specification of the hybrid vehicle 1 and is not limited to the above-described first to fifth speed stages.

The shift stage of the manual transmission unit 4 is switched in response to an operation position of a selector 40 operated by a driver. The operation position of the selector 40 is detected by a shift position sensor 41. The shift position sensor 41 is connected to the ECU 10 and transmits a detection result to the ECU 10.

The manual transmission unit 4 is provided with a neutral switch 42.

The neutral switch 42 is connected to the ECU 10. The neutral switch 42 is a switch which detects a state in which any shift stage of the manual transmission unit 4 is not established, that is, a neutral state and is turned on when the manual transmission unit 4 is in a neutral state.

A clutch 7 is provided in a power transmission path between the engine 2 and the manual transmission unit 4. As the clutch 7, for example, a friction clutch can be used. The engine 2 and the manual transmission unit 4 are connected to each other through the clutch 7.

The clutch 7 is operated by a clutch actuator 70 and is configured to be switched to any one of an engaged state in which power is transmitted between the engine 2 and the motor generator 3, a released state in which no power is transmitted, and a half-clutch state in which torque is transmitted with a difference in rotation. The clutch actuator 70 is connected to the ECU 10 and is controlled by the ECU 10.

The ECU 10 controls the clutch actuator 70 in response to the stepping amount of the clutch pedal 71 operated by the driver so that the operation similar to that in the manual clutch is performed.

The stepping amount of the clutch pedal 71 is detected by the clutch pedal sensor 72.

The clutch pedal sensor 72 is connected to the ECU 10 and transmits a signal in response to the stepping amount of the clutch pedal 71 to the ECU 10.

The hybrid vehicle 1 includes an accelerator pedal 90 operated by the driver. The stepping amount of the accelerator pedal 90 is detected by an accelerator opening degree sensor 91. The accelerator opening degree sensor 91 is connected to the ECU 10, detects the stepping amount of the accelerator pedal 90 as the accelerator opening degree, and transmits a signal in response to the accelerator opening degree to the ECU 10.

The ECU 10 is configured as a computer unit including a central processing unit (CPU), a random access memory (RAM), a read only memory (ROM), a flash memory storing backup data or the like, an input port, and an output port.

The ROM of the computer unit stores a program for allowing the computer unit to function as the ECU 10 along with various constants or maps. That is, since the CPU executes a program stored in the ROM by using the RAM as a working region, the computer unit functions as the ECU 10 of this embodiment.

A vehicle speed sensor 11 is connected to the ECU 10 in addition to the above-described sensors. The vehicle speed sensor 11 detects the vehicle speed of the hybrid vehicle 1 and transmits the detection result to the ECU 10.

The ECU 10 is configured to switch the control mode of the hybrid vehicle 1. As the control mode of this embodiment, an EV mode and an HEV mode are set.

The EV mode is a control mode in which the clutch 7 is in a released state and the hybrid vehicle 1 is allowed to run by the power of the motor generator 3. The HEV mode is a control mode in which the clutch 7 is in an engaged state and the hybrid vehicle 1 is allowed to run by the power of the engine 2 or the engine 2 and the motor generator 3.

The ECU 10 switches the EV mode and the HEV mode based on, for example, the accelerator opening degree and the engine rotation number.

The ECU 10 shifts to the HEV mode, for example, when the driver request torque determined by the accelerator opening degree and the engine rotation number exceeds an HEV transition threshold.

The ECU 10 shifts to the EV mode, for example, when the driver request torque determined by the accelerator opening degree and the engine rotation number is lower than an EV transition threshold.

The ECU 10 prepares the HEV transition threshold and the EV transition threshold for each shift stage of the manual transmission unit 4.

The ECU 10 may change the HEV transition threshold and the EV transition threshold by the vehicle speed.

In the EV mode, the ECU 10 calculates the virtual engine rotation speed by assuming the engine rotation speed when the operation similar to that in the HEV mode is performed.

The ECU 10 calculates the virtual engine rotation speed based on, for example, the driver request torque, the clutch operation amount, the shift position, and the engine inertia moment.

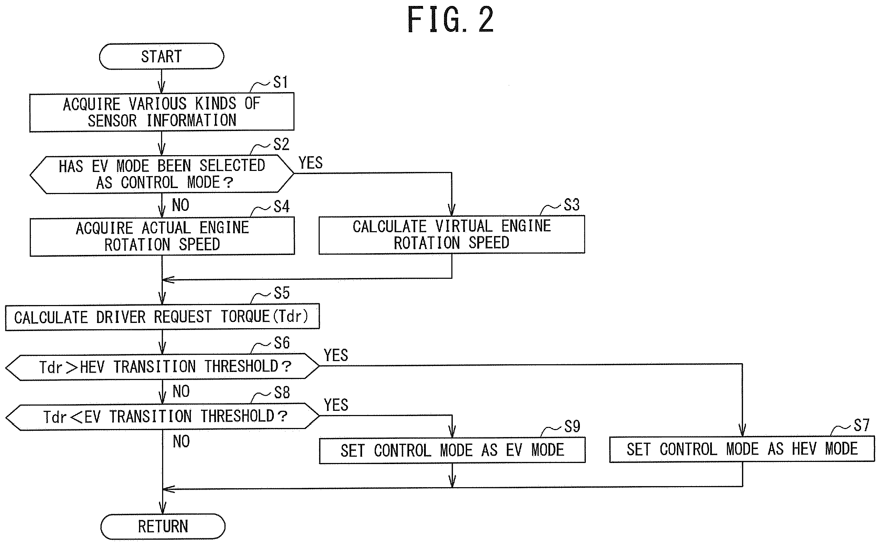

The mode determination process using the control device according to this embodiment with the above-described configuration will be described with reference to Fig. 2. Additionally, the mode determination process to be described below is started when the operation of the ECU 10 is started and is performed at a predetermined time interval.

In step S1, the ECU 10 acquires various kinds of sensor information of the hybrid vehicle 1 such as a vehicle speed, a shift position, an accelerator opening degree, and a clutch pedal stepping amount. After the process of step S1 is performed, the ECU 10 performs the process of step S2.

In step S2, the ECU 10 determines whether or not the currently selected control mode is the EV mode. When it is determined that the currently selected control mode is the EV mode, the ECU 10 performs the process of step S3.

When it is determined that the currently selected control mode is not the EV mode, the ECU 10 performs the process of step S4.

In step S3, the ECU 10 calculates the virtual engine rotation speed by the method to be described later. After the process of step S3 is performed, the ECU 10 performs the process of step S5.

In step S4, the ECU 10 acquires an actual engine rotation speed which is the actual rotation speed of the engine 2. After the process of step S4 is performed, the ECU 10 performs the process of step S5.

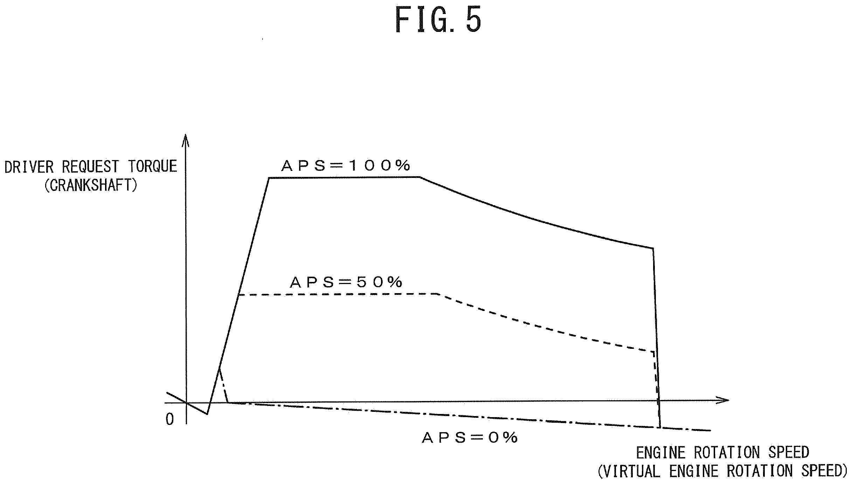

In step S5, the ECU 10 calculates a driver request torque (Tdr) by interpolating the map shown in Fig. 5 based on the accelerator opening degree and the engine rotation speed (in the case of the EV mode, the virtual engine rotation speed). In the drawing, "APS" indicates the accelerator opening degree. After the process of step S5 is performed, the ECU 10 performs the process of step S6.

The driver request torque map shown in Fig. 5 is set to have a negative value regardless of the accelerator opening degree in a predetermined rotation speed range (a region where self-sustained operation is not possible) below idle rotation and simulates an engine stall when the virtual engine rotation speed decreases in the EV mode.

Further, the driver request torque map is set to have a negative value regardless of the accelerator opening degree also in a high rotation speed range that reduces engine torque by cutting fuel or the like to prevent over-rotation of the engine 2 and simulates a state in which engine torque is reduced by cutting fuel or the like when the virtual engine rotation speed becomes excessive in the EV mode.

In step S6, the ECU 10 determines whether or not the driver request torque (Tdr) is larger than the HEV transition threshold.

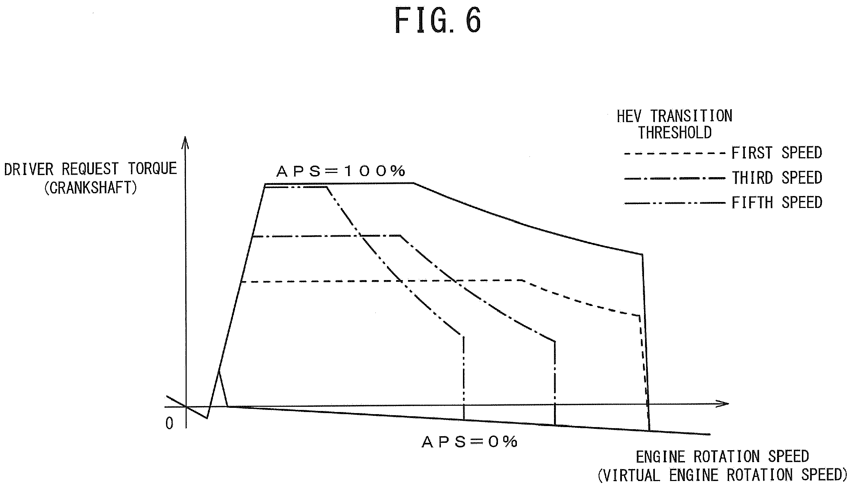

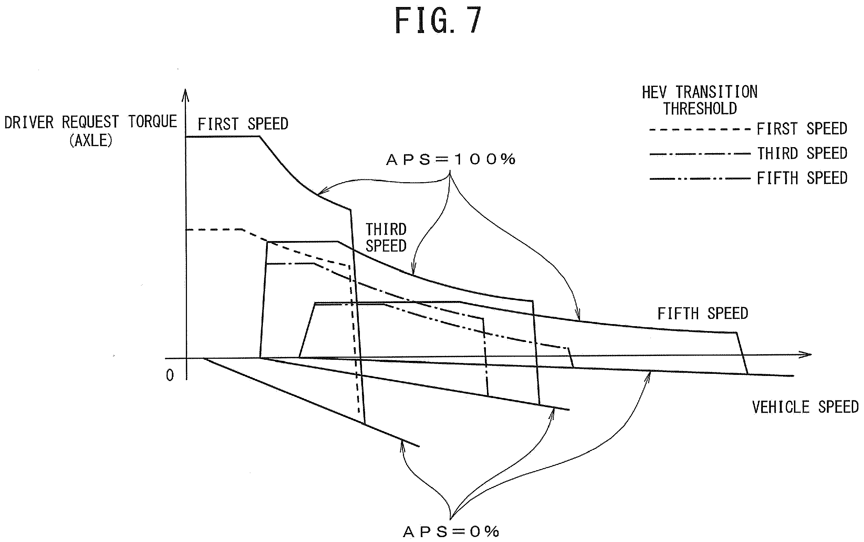

The HEV transition threshold is set for each shift stage of the manual transmission unit 4 and the EV mode is set to a high rotation and high output region as it becomes a lower speed stage. Further, as shown in Fig. 6, the EV mode region is set to a high torque region as it becomes a higher speed stage. Additionally, in this embodiment, a map of the driver request torque of the crankshaft and the engine rotation speed (the virtual engine rotation speed) is used, but as shown in Fig. 7, a map of the driver request torque of the axle and the vehicle speed can also be used. Further, examples of the first speed, the third speed, and the fifth speed are shown in Figs. 6 and 7, but other shift stages are also set.

When it is determined that the driver request torque (Tdr) is larger than the HEV transition threshold, the ECU 10 performs the process of step S7.

When it is determined that the driver request torque (Tdr) is not larger than the HEV transition threshold, the ECU 10 performs the process of step S8.

In step S7, the ECU 10 sets the control mode as the HEV mode. After the process of step S7 is performed, the ECU 10 ends the mode determination process.

In step S8, the ECU 10 determines whether or not the driver request torque (Tdr) is smaller than the EV transition threshold.

The EV transition threshold has hysteresis on the low torque side and the low rotation side in order to prevent hunting with respect to the HEV transition threshold shown in Figs. 6 and 7.

When it is determined that the driver request torque (Tdr) is smaller than the EV transition threshold, the ECU 10 performs the process of step S9.

When it is determined that the driver request torque (Tdr) is not smaller than the HEV transition threshold, the control mode is not changed since it is within the hysteresis range and the ECU 10 ends the mode determination process.

In step S9, the ECU 10 sets the control mode as the EV mode. After the process of step S9 is performed, the ECU 10 ends the mode determination process.

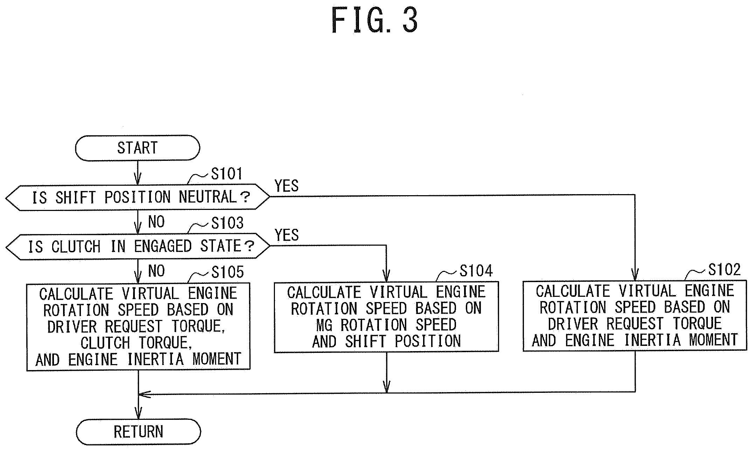

A virtual engine rotation speed calculation process of step S3 of such a mode determination process will be described with reference to Fig. 3.

In step S101, the ECU 10 determines whether or not the shift position is neutral. When it is determined that the shift position is neutral, the ECU 10 performs the process of step S102.

When it is determined that the shift position is not neutral, the ECU 10 performs the process of step S103.

In step S102, the ECU 10 calculates the virtual engine rotation speed based on the driver request torque and the engine inertia moment. After the process of step S102 is performed, the ECU 10 ends the virtual engine rotation speed calculation process.

When the shift position is neutral, a change rate of the engine rotation speed is determined by the engine torque and the engine inertia moment in the HEV mode. Here, in the case of the EV mode, the virtual engine rotation speed is calculated by the following Formula (1) from the driver request torque and the engine inertia moment.

$$Ne(n) = Ne(n\text{-}1) + (Te/Ie) \times tp \cdots (1)$$

where, $Ne(n)$ is the virtual engine rotation speed [rad/s], $Ne(n\text{-}1)$ is the virtual engine rotation speed (previous value) [rad/s], $Ie$ is the engine inertia [kg·m$^2$], $Te$ is the driver request torque [Nm], and $tp$ is the calculation cycle [s].

In step S103, the ECU 10 determines whether or not the clutch 7 is in the engaged state. When it is determined that the clutch 7 is in the engaged state, the ECU 10 performs the process of step S104.

When it is determined that the clutch 7 is not in the engaged state, the ECU 10 performs the process of step S105.

Here, it is determined that the clutch 7 is in the engaged state when both Conditions 1 and 2 below are satisfied. Since the clutch 7 may be in the process of shifting to the engaged state (a state in which the differential rotation of the clutch 7 is decreasing toward zero) only in Condition 1, it is determined that the clutch 7 is engaged when Condition 2 (the differential rotation of the clutch 7 is almost zero) is also satisfied.

$$\text{Condition 1} \cdots |Te| < Tc$$

$$\text{Condition 2} \cdots Ni - \alpha < Ne(n\text{-}1) < Ni + \alpha$$

where, $Ne(n\text{-}1)$ is the virtual engine rotation speed (previous value) [rad/s], $Te$ is the driver request torque [Nm], $Tc$ is the clutch transmission torque upper limit [Nm], $Ni$ is the input rotation speed [rad/s], and $\alpha$ is the clutch engagement determination rotation difference threshold [rad/s],

Additionally, the input rotation speed ($Ni$) is calculated from the gear ratio of the selected shift stage and the MG rotation speed which is the rotation speed of the motor generator 3.

In step S104, the ECU 10 calculates the virtual engine rotation speed based on the MG rotation speed and the shift position. After the process of step S104 is performed, the ECU 10 ends the virtual engine rotation speed calculation process.

When the clutch 7 is in the engaged state, the engine rotation speed is the same as the input shaft rotation speed of the manual transmission unit 4 in the HEV mode. Here, the virtual engine rotation speed is calculated by the following Formula (2) from the gear ratio of the shift stage selected from the shift position and the MG rotation speed in the EV mode.

$$Ne(n) = Nmg \times \text{gear ratio} \cdots (2)$$

where, $Ne(n)$ is the virtual engine rotation speed [rad/s], $Nmg$ is the MG rotation speed [rad/s], and the gear ratio is the gear ratio between the input shaft and the motor generator 3.

In step S105, the ECU 10 calculates the virtual engine rotation speed based on the driver request torque, the clutch torque, and the engine inertia moment. After the process of step S105 is performed, the ECU 10 ends the virtual engine rotation speed calculation process.

When the clutch 7 is not in the engaged state, there are a state in which the clutch 7 transmits torque in a slipping state and a state in which the clutch 7 is completely released. However, since the clutch transmission torque is zero in the clutch released state, it can be handled by the same calculation method.

In the HEV mode, a change rate of the engine rotation number is determined by the engine torque, the engine inertia moment, and the clutch transmission torque upper limit. Here, in the EV mode, the virtual engine rotation speed is calculated by the following Formula (3) from the driver request torque, the engine inertia moment, and the clutch transmission torque upper limit.

$$Ne(n) = Ne(n\text{-}1) + ((Te - Tc)/Ie) \times tp \cdots (3)$$

Here, $Tc$ is set to a positive value in the case of $Ne(n\text{-}1) >$ input rotation speed and is set to a negative value in the case of $Ne(n\text{-}1) <$ input rotation speed.

where, $Ne(n)$ is the virtual engine rotation speed [rad/s], $Ne(n\text{-}1)$ is the virtual engine rotation speed (previous value) [rad/s], $Te$ is the driver request torque [Nm], $Ie$ is the engine inertia [kg·m$^2$], $Tc$ is the clutch transmission torque upper limit [Nm], and $tp$ is the calculation cycle [s].

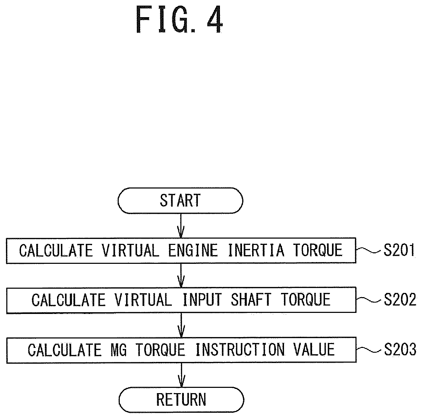

Next, a process of calculating the MG torque instruction value which is the torque instruction value to the motor generator 3 in the EV mode will be described with reference to Fig. 4.

In step S201, the ECU 10 calculates the virtual engine inertia torque. After the process of step S201 is performed, the ECU 10 performs the process of step S202.

The virtual engine inertia torque is calculated by the following Formula (4) from the inertia moment of the engine 2 and the change rate of the virtual engine rotation speed.

$$TIe(n) = ((Ne(n\text{-}1) - Ne(n))/tp) \times Ie \cdots (4)$$

where, Tle(n) is the virtual engine inertia torque [Nm], Ne(n) is the virtual engine rotation speed [rad/s], Ne(n-1) is the virtual engine rotation speed (previous value) [rad/s], Ie is the engine inertia [kg·m²], and tp is the calculation cycle [s].

In step S202, the ECU 10 calculates the virtual input shaft torque. After the process of step S202 is performed, the ECU 10 performs the process of step S203.

The virtual engine inertia torque is added to the driver request torque and the virtual input shaft torque output from the engine 2 to the input shaft of the manual transmission unit 4 is calculated.

In step S203, the ECU 10 calculates the MG torque instruction value. After the process of step S203 is performed, the ECU 10 ends the MG torque instruction value calculation process.

The MG torque instruction value is calculated by multiplying the virtual input shaft torque by the gear ratio of the shift stage of the shift position detected by the shift position sensor 41 (in the neutral case, the gear ratio is regarded as zero).

In this way, in this embodiment, the ECU 10 maintains the EV mode until a ratio with respect to the upper limit of the accelerator opening degree becomes larger as the shift stage of the manual transmission unit 4 becomes a higher speed stage.

Accordingly, since the EV mode is maintained until a ratio with respect to the upper limit of the accelerator opening degree becomes larger as the shift stage becomes a higher speed stage, it is possible to improve fuel efficiency by suppressing a shift to the HEV mode not required by the driver.

Further, the ECU 10 prohibits the shift from the EV mode to the HEV mode until a predetermined vehicle speed when the shift stage of the manual transmission unit 4 is a high speed stage.

Accordingly, since the shift to the HEV mode is prohibited until a predetermined vehicle speed in a high speed stage, it is possible to further suppress a shift to the HEV mode not required by the driver.

Further, the ECU 10 maintains the EV mode until the virtual engine rotation speed becomes higher as the shift stage of the manual transmission unit 4 becomes a lower speed stage.

Since the driving power is larger than that of the high speed stage even with the same accelerator opening degree in the low speed stage, the vehicle speed rises in a short time so that the EV mode is shifted to the HEV mode. In addition, since the HEV mode is also shifted to the EV mode only by the slight operation of the accelerator opening degree, it is conceivable that the frequency of shift between the EV mode and the HEV mode becomes high and the driver feels troublesome.

Since the EV mode is maintained until the virtual engine rotation speed becomes higher as the shift stage becomes a lower speed stage, it is possible to suppress the trouble sensed by the driver while improving fuel efficiency by suppressing a shift from the EV mode to the HEV mode in a short time when the driver selects a low speed stage.

Further, the ECU 10 maintains the EV mode until the output becomes higher as the shift stage of the manual transmission unit 4 becomes a lower speed stage.

Accordingly, since the EV mode is maintained until the output becomes high, it is possible to suppress the trouble sensed by the driver while improving fuel efficiency by suppressing a shift from the EV mode to the HEV mode in a short time when the driver selects the low speed stage. Additionally, the output is calculated by the product of the torque and the rotation speed.

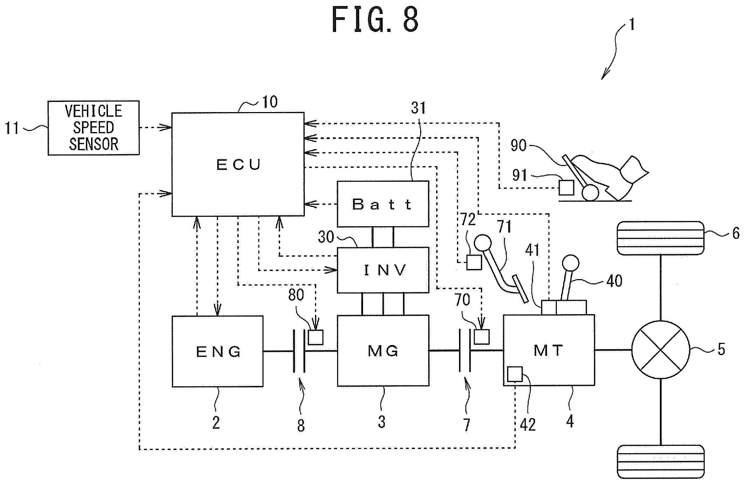

Additionally, in this embodiment, a configuration in which the motor generator 3 is provided in the power transmission path between the manual transmission unit 4 and the drive wheel 6 is shown, but as shown in Fig. 8, but this invention can be implemented similarly even in a configuration in which the motor generator 3 is provided in the power transmission path between the engine 2 and the manual transmission unit 4.

In Fig. 8, an automatic clutch 8 is provided in the power transmission path between the engine 2 and the motor generator 3. As the automatic clutch 8, for example, a friction clutch can be used. The engine 2 and the motor generator 3 are connected to each other through the automatic clutch 8.

The automatic clutch 8 is operated by a clutch actuator 80 and is configured to be switched between an engaged state that transmits power between the engine 2 and the motor generator 3 and a released state that does not transmit power. The clutch actuator 80 is connected to the ECU 10 and is controlled by the ECU 10.

In this case, the MG rotation speed may be used instead of the virtual engine rotation speed used in the mode determination or the driver request torque in the EV mode.

Further, for the MG torque instruction value in the EV mode, the driver request torque of the crankshaft may be used regardless of the shift stage or the clutch operation amount.

In this embodiment, an example in which the ECU 10 performs various kinds of determination or calculation based on various kinds of sensor information has been described, but this invention is not limited thereto. The hybrid vehicle 1 may include a communication unit capable of communicating with an external device such as an external server, perform various kinds of determination or calculation by the external device based on the detection information of various sensors transmitted from the communication unit, receive the determination result or calculation result by the communication unit, and perform various kinds of control using the received determination result or calculation result.

REFERENCE NUMERALS

1 ... Hybrid vehicle, 2 ... Engine, 3 ... Motor generator (electric motor), 4 ... Manual transmission unit, 6 ... Drive wheel, 7 ... Clutch, 10 ... ECU (control unit), 11 ... Vehicle speed sensor, 41 ... Shift position sensor, 42 ... Neutral switch, 72 ... Clutch pedal sensor, 91 ... Accelerator opening degree sensor

## Claims

1. A control device for a hybrid vehicle (1) comprising:

     an engine (2) for driving a drive wheel (6) through a manual transmission unit (4);
     the manual transmission unit (4) allowing a driver to manually select an arbitrary shift stage and configured to shift and output a rotation from the engine (2) at a shift ratio corresponding to any one of a plurality of shift stages;
     a clutch (7) for enabling or disabling the transmission of power between the engine (2) and the manual transmission unit (4);
     an electric motor (3); and
     a control unit (10) switching an EV mode allowing the vehicle to run only using the electric motor (3) as a drive source and an HEV mode allowing the vehicle to run using the engine (2) and the electric motor (3) as a drive source,
     wherein the control unit (10) maintains the EV mode until a ratio with respect to an upper limit of an accelerator opening degree becomes larger as the shift stage of the manual transmission unit (4) becomes a higher shift stage.

2. The control device for the hybrid vehicle as claimed in claim 1,
   wherein the control unit (10) prohibits a shift from the EV mode to the HEV mode until a predetermined vehicle speed becomes larger as the shift stage of the manual transmission unit (4) becomes a higher shift stage.

3. The control device for the hybrid vehicle as claimed in claim 1 or 2,
   wherein the control unit (10) maintains the EV mode until a virtual engine rotation speed corresponding to an engine rotation speed calculated assuming the HEV mode becomes higher as the shift stage of the manual transmission unit (4) becomes a lower shift stage.

4. The control device for the hybrid vehicle as claimed in any one of claims 1 to 3,
   wherein the control unit (10) maintains the EV mode until a driver request torque at a vehicle axle becomes higher as the shift stage of the manual transmission unit (4) becomes a lower shift stage.

## Patentansprüche

1. Steuervorrichtung für ein Hybridfahrzeug (1), umfassend:

     eine Antriebsmaschine (2) zum Antrieb eines Antriebsrads (6) über ein manuelles Getriebe (4);

     ein manuelles Getriebe (4), das es einem Fahrer ermöglicht, manuell eine beliebige Schaltstufe auszuwählen, und das so konfiguriert ist, dass es eine Drehung von der Antriebsmaschine (2) in einem Schaltverhältnis schaltet und ausgibt, das einer beliebigen aus einer Mehrzahl von Schaltstufen entspricht;
     eine Kupplung (7) zum Ermöglichen oder Unterbinden der Kraftübertragung zwischen der Antriebsmaschine (2) und dem manuellen Getriebe (4);
     einen Elektromotor (3); und
     eine Steuereinheit (10), die zwischen einem EV-Modus, in dem das Fahrzeug nur mit dem Elektromotor (3) als Antriebsquelle betrieben werden kann, und einem HEV-Modus, in dem das Fahrzeug mit der Antriebsmaschine (2) und dem Elektromotor (3) als Antriebsquelle betrieben werden kann, umschaltet,
     wobei die Steuereinheit (10) den EV-Modus beibehält, bis ein Verhältnis in Bezug auf eine obere Grenze eines Gaspedalöffnungsgrads größer wird, wenn die Schaltstufe des manuellen Getriebes (4) eine höhere Schaltstufe wird.

2. Steuervorrichtung für ein Hybridfahrzeug gemäß Anspruch 1,
   wobei die Steuereinheit (10) ein Schalten vom EV-Modus in den HEV-Modus bis zu einer vorbestimmten Fahrzeuggeschwindigkeit verhindert, wenn eine Schaltstufe des manuellen Getriebes (4) die höhere Schaltstufe ist.

3. Steuervorrichtung für ein Hybridfahrzeug gemäß Anspruch 1 oder 2,
   wobei die Steuereinheit (10) den EV-Modus beibehält, bis eine virtuelle Drehzahl der Antriebsmaschine, die einer unter der Annahme des HEV-Modus berechneten Drehzahl der Antriebsmaschine entspricht, höher wird, wenn die Schaltstufe der manuellen Getriebeeinheit (4) eine niedrigere Schaltstufe wird.

4. Steuervorrichtung für das Hybridfahrzeug gemäß einem der Ansprüche 1 bis 3,
   wobei die Steuereinheit (10) den EV-Modus beibehält, bis ein Fahreranforderungsdrehmoment an einer Fahrzeugachse höher wird, wenn die Schaltstufe der manuellen Getriebeeinheit (4) eine niedrigere Schaltstufe wird.

## Revendications

1. Dispositif de commande d'un véhicule (1) hybride comprenant :

   un moteur (2) pour entraîner une roue (6) motrice par une unité (4) de transmission manuelle ;
   l'unité (4) de transmission manuelle permettant au conducteur de sélectionner manuellement un palier de vitesse arbitraire et étant configurée pour changer et sortir une rotation du moteur (2) à un rapport de vitesse correspondant à l'un quelconque d'une pluralité de paliers de vitesse ;
   un embrayage (7) pour permettre ou ne pas permettre la transmission de puissance entre le moteur (2) et l'unité (4) de transmission manuelle ;
   un moteur (3) électrique ; et
   une unité (10) de commande commutant un mode EV permettant au véhicule de se déplacer en utilisant seulement le moteur (3) électrique comme source d'entraînement et un mode HEV permettant au véhicule de se déplacer en utilisant le moteur (2) et le moteur (3) électrique comme source d'entraînement,
   dans lequel l'unité (10) de commande maintient le mode EV jusqu'à ce qu'un rapport par rapport à une limite supérieure d'un degré d'ouverture de l'accélérateur devienne plus grand au fur et à mesure que le palier de vitesse de l'unité (4) de transmission manuelle devient un palier de vitesse plus haut.

2. Dispositif de commande du véhicule hybride suivant la revendication 1,
   dans lequel l'unité (10) de commande empêche un passage du mode EV au mode HEV jusqu'à ce qu'une vitesse déterminée à l'avance du véhicule devienne plus grande au fur et à mesure que le palier de vitesse de l'unité (4) de transmission manuelle devient un palier de vitesse plus haut.

3. Dispositif de commande du véhicule hybride suivant la revendication 1 ou 2,
   dans lequel l'unité (10) de commande maintient le mode EV jusqu'à ce qu'une vitesse de rotation virtuelle du moteur correspondant à une vitesse de rotation du moteur, calculée en faisant l'hypothèse que le mode HEV devienne plus haut, au fur et à mesure que le palier de vitesse de l'unité (4) de transmission manuelle devient un état de vitesse plus bas.

4. Dispositif de commande du véhicule hybride suivant l'une quelconque des revendications 1 à 3,
   dans lequel l'unité (10) de commande maintient le mode EV jusqu'à ce qu'un couple demandé par le conducteur à un essieu du véhicule devienne plus grand, au fur et à mesure que le palier de vitesse de l'unité (4) de transmission manuelle devient un palier de vitesse plus bas.

FIG. 1

EP 3 974 225 B1

# FIG. 2

START

↓

ACQUIRE VARIOUS KINDS OF SENSOR INFORMATION  ～S1

↓

HAS EV MODE BEEN SELECTED AS CONTROL MODE ?  ～S2  —YES→  CALCULATE VIRTUAL ENGINE ROTATION SPEED  ～S3

↓ NO

ACQUIRE ACTUAL ENGINE ROTATION SPEED  ～S4

↓

CALCULATE DRIVER REQUEST TORQUE(Tdr)  ～S5

↓

Tdr＞HEV TRANSITION THRESHOLD ?  ～S6  —YES→  SET CONTROL MODE AS HEV MODE  ～S7

↓ NO

Tdr＜EV TRANSITION THRESHOLD ?  ～S8  —YES→  SET CONTROL MODE AS EV MODE  ～S9

↓ NO

RETURN

# FIG. 3

START

S101
IS SHIFT POSITION NEUTRAL? — YES

NO — S103
IS CLUTCH IN ENGAGED STATE? — YES

NO — S105

CALCULATE VIRTUAL ENGINE
ROTATION SPEED BASED ON
DRIVER REQUEST TORQUE,
CLUTCH TORQUE,
AND ENGINE INERTIA MOMENT

S104
CALCULATE VIRTUAL ENGINE
ROTATION SPEED BASED ON
MG ROTATION SPEED
AND SHIFT POSITION

S102
CALCULATE VIRTUAL ENGINE
ROTATION SPEED BASED ON
DRIVER REQUEST TORQUE
AND ENGINE INERTIA MOMENT

RETURN

# FIG. 4

```
        ┌─────────────┐
        │    START    │
        └──────┬──────┘
               ↓
┌──────────────────────────────────────┐
│ CALCULATE VIRTUAL ENGINE INERTIA TORQUE │ ～S201
└──────────────────────────────────────┘
               ↓
┌──────────────────────────────────────┐
│   CALCULATE VIRTUAL INPUT SHAFT TORQUE   │ ～S202
└──────────────────────────────────────┘
               ↓
┌──────────────────────────────────────┐
│  CALCULATE MG TORQUE INSTRUCTION VALUE   │ ～S203
└──────────────────────────────────────┘
               ↓
        ┌─────────────┐
        │   RETURN    │
        └─────────────┘
```

# FIG. 5

DRIVER REQUEST TORQUE
(CRANKSHAFT)

APS＝１００％

APS＝５０％

APS＝０％

0

ENGINE ROTATION SPEED
(VIRTUAL ENGINE ROTATION SPEED)

# FIG. 6

DRIVER REQUEST TORQUE
(CRANKSHAFT)

HEV TRANSITION
THRESHOLD

------- FIRST SPEED

—·—·—·— THIRD SPEED

—··—··—·· FIFTH SPEED

APS＝１００％

APS＝０％

0

ENGINE ROTATION SPEED
(VIRTUAL ENGINE ROTATION SPEED)

EP 3 974 225 B1

# FIG. 7

DRIVER REQUEST TORQUE
(AXLE)

FIRST SPEED

APS＝１００％

THIRD
SPEED

FIFTH SPEED

0

APS＝０％

VEHICLE SPEED

HEV TRANSITION
THRESHOLD

－－－－－－－－－ FIRST SPEED

－・－・－・－ THIRD SPEED

－・・－・・－ FIFTH SPEED

EP 3 974 225 B1

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012041038 A

- US 2015298681 A1